# EUROPEAN PATENT SPECIFICATION

(11) **EP 3 964 807 B1**
(45) Date of publication and mention of the grant of the patent: **22.11.2023**
(21) Application number: 20194146.5
(22) Date of filing: 02.09.2020
(51) Int. Cl.: G01H 3/00, G07C 5/00, G01H 3/12, H04R 3/00, G07C 5/08, G01V 1/00, G08B 13/16, B60R 21/013, G05D 1/00, B60W 30/08, G08G 1/01, G08G 1/0965, G08G 1/0962, G08G 1/0967, G08G 1/16, G01H 3/04, G01H 3/10, G01V 1/18, G01V 1/28, B60K 28/08, B60R 21/0134

(54) **ACOUSTIC DETECTION SYSTEM FOR A VEHICLE AND METHOD FOR ITS OPERATION**
SYSTEM ZUR AKUSTISCHEN DETEKTION FÜR EIN FAHRZEUG UND VERFAHREN ZU DESSEN BETRIEB
SYSTÈME DE DÉTECTION ACOUSTIQUE POUR VÉHICULE ET SON PROCÉDÉ DE FONCTIONNEMENT

(43) Date of publication of application: 09.03.2022
(73) Proprietor: KNORR-BREMSE Systeme für Nutzfahrzeuge GmbH, 80809 München (DE)
(72) Inventor: Horvath, Csaba, 1116 Budapest (HU); Gyurkó, Zoltán, 8771 Hahót (HU); Németh, Huba, 1116 Budapest (HU); Straub, Kornél, 2013 Pomáz (HU); Duque Velez, Simon Felipe, 1053 Budapest (HU)
(74) Representative: LifeTech IP Spies & Behrndt Patentanwälte PartG mbB

(56) References cited:
- DE-A1-102012 200 230
- KR-A- 20070 101 702
- US-A1- 2016 274 253
- US-A1- 2017 120 903
- US-A1- 2019 286 148

## Description

The present invention relates to an acoustic detection system for a vehicle, to a method of acoustic detection of an event for a vehicle, and in particular to an environmental event and vehicle state detection of an autonomous vehicle using acoustic sensors.

Vehicles, and in particular autonomous vehicles, comprising radar, lidar, camera, and ultrasonic devices as sensors for recognizing aspects of an environment of the vehicle are well-known in the state of the art. Sensors which detect electromagnetic waves may operate in a passive way by merely sensing electromagnetic waves originating from other sources, or in an active way by emitting a signal and sensing its reflection. Ultrasonic sensors are employed in the state of the art for range detection, operating by actively emitting ultrasound waves and sensing their reflection in order to determine a distance to a reflecting surface.

At least some of these sensors are employed to recognize particular events in the environment of the vehicle. Such an event may for example consist in a collision of the vehicle with another object. A system for detecting a collision may e.g. be found in WO2018144041A1, which discloses, for an autonomous vehicle, a control system, tasked with analyzing the sensor data for a collision and generating a claim directed at an insurance provider. A further system, detecting not the collision but rather a risk of it, may be found in CN103569112A, with the system estimating a collision threat on a basis of matched data from a sensor and a camera. Another system disclosing a method to identify a collision threat may be found in US2012306663A1.

US 2016/274253 A1 discloses an approaching vehicle detection unit configured to detect a sound source around the own vehicle and to determine whether the sound source is a vehicle approaching the own vehicle. The system may further detect an environmental information, and may use a CCD camera covering the situation in front of the own vehicle. US 2017/120903 A1 discloses a parking assist system configured to set a speed limit for a vehicle during a maneuver, and comprising an audio sensor configured to sense an ambient sound within or an exterior sound outside of the vehicle. The parking assist system may also include data from distance sensors and environmental sensors, pertaining to the situation exterior to the vehicle. As ambient sound within the vehicle cabin, the parking assist system may recognize critical sounds (a baby crying, sounds associated with danger, human voice), and accordingly further lower the speed limit. DE 10 2012 200230 A1 discloses a system for detecting environmental conditions of a vehicle acoustically, by sending an acoustic signal and receiving and interpreting its reflection. An ultrasonic pulse sonar (sodar) is sensitive to climatic (environmental) influences such as air temperature, pressure, humidity, wind strength and direction, temperature changes, etc.. The detector produces a model of the climatic situation, for example strong side wind, in the surroundings of the vehicle from the changes in the received acoustic signal. These variables are taken into account when detecting target range and velocity using a characteristic time curve and/or used for further vehicle functions (braking, acceleration, steering, maximum speed, steering, communication, active roll stabilization). The model of the climatic situation may be produced from propagation time differences of signals that have different propagation directions on otherwise identical propagation paths. Direct (non-reflected) signals may be used. Multiple sensors having different orientations may be used.

US 2019/0286148 A1 discloses a control apparatus which is configured to detect based on acoustic data of a falling-sound sensor, a falling of a load from a load bed of a vehicle onto a road. KR 10-2007-0101702 A discloses a Passive Keyless Entry System for a vehicle, where a person approaching the vehicle may be detected based on acoustic sensors.

Due to the possibility of sensor errors, autonomous vehicles make a high redundancy of sensors for each individual task necessary, or at least desirable. Furthermore, if a system exploits preexisting sensors originally introduced on an autonomous vehicle for a different purpose, the particular design or blind spots of these sensors may lead to an incomplete performance. Both in order to achieve a redundancy as well as for an execution of new tasks, sensors operating by mechanisms complementary to those mentioned above are of advantageous benefit. This can be achieved by mechanisms aimed at a passive detection of audible acoustic signals. Therefore there is a demand for a system configured to use passive acoustic sensors on a vehicle in order to detect, in an environment of the vehicle, specific events or specific states of the vehicle.

A contribution towards meeting this demand is provided by an acoustic detection system according to claim 1, a vehicle, in particular an autonomous vehicle, of claim 10, a method of acoustic detection of an event of claim 11, and a computer product of claim 12. The dependent claims refer to further advantageous realizations of the subject matter of the independent claims.

In a first aspect, the present invention relates to an acoustic detection system for a vehicle according to claim 1.

The vehicle may in particular be an autonomous vehicle with or without a driver. More specifically, the vehicle may be an autonomous commercial vehicle. If a driver is present on the vehicle, advantageously the acoustic sensors are not specifically adapted to sense utterances of the driver, but rather to detect events outside and/or in a cargo area of the vehicle.

The reception module is configured to collect the acoustic sensor data from the acoustic sensors, and to provide the acoustic sensor data to the detection module. If the vehicle is an autonomous vehicle, the reception module may be further configured to receive information from components of an automatic driving system.

The detection module is adapted to detect events, or respectively information contained in acoustic emissions thereof, on or around the vehicle. This detection may involve recognizing patterns in the acoustic sensor data, differentiating or isolating these patterns, and classifying them according to the corresponding events. Detecting an event in the acoustic sensor data may be based on an analysis of an amplitude sequence, a spectrum, and/or a cepstrum of the acoustic sensor data, and may be achieved by means of a trained neural network. Conventional signal processing techniques may also be employed, either alternatively or additionally to a neural network algorithm, in order to achieve the detection. By the analysis of the acoustic sensor data, various environmental events which are hard to detect by other sensors can be identified or verified, such as, for example, a collision with another vehicle, a collision with a human, or a detection of gusts of wind hitting the vehicle. The analysis of the acoustic sensor data can provide significant information regarding the state of the vehicle, and identify events around the vehicle (like collisions of the vehicle) and/or events on the vehicle (like a flapping cover of cargo, a humming of a defect wheel bearing, or an exploding tire). If the detection module has detected an event on or around the vehicle, it may be further configured to send information about the event to another component of the vehicle or to a driver. In particular, if the vehicle is an autonomous vehicle, information obtained by the detection module may be employed as input for a behavior and path planner of an autonomous driving system. The detection module may also be configured to broadcast the information about the event to a receiver remote from the vehicle, e.g. by employing a system for wireless communication on the vehicle. Depending on the embodiment, the information may comprise a warning issued upon detection of the event, merely the fact that the recognized event has occurred, a time and a relative position where and when the event occurred, and/or more data about the recognized event.

Depending on the embodiment, the reception module and the detection module may be realized separately, or within one electronic control unit. They may also be partially or fully integrated into each other, or into other components of the vehicle.

Optionally the vehicle comprises at least one further sensor and/or camera for producing further sensor data indicative of the event, and the reception module is further configured to receive the further sensor data and to include the further sensor data in detecting or in confirming the event. The inclusion of the further sensor data may e.g. be implemented by sensor data fusion. The inclusion may in particular comprise a temporal and/or spatial correlation of the acoustic sensor data and the further sensor data. Including the data of further sensors on the vehicle is in particular advantageous for corroborating or enhancing information about the event obtained from other components and/or sensors of the vehicle, and/or for an identification of a cause, direction, intensity, or other modality of the event. The acoustic detection of the event may furthermore complement the further sensor data. The further sensor may e.g. be a camera adapted to supply an autonomous driving system with an image or video from a certain part of the surroundings of the vehicle, but with a blind spot immediately adjacent to the vehicle. If this is the case, the camera can be used to detect an object that has a risk to collide with the vehicle, but the camera may not be able to actually detect the collision itself. This gap may be closed by the acoustic detection system.

Optionally the at least one further sensor and/or camera is configured to sense one or more of the following: an acceleration, a torque, a yaw moment, a wheel speed, an inclination, a collision, a wind, a loading or an unloading, an opening of a loading area, an image of surroundings of the vehicle.

The acceleration may e.g. be a downward acceleration of a cargo area (as e.g. on a trailer of a commercial vehicle), corresponding to a weight deposited in the cargo area. The detection module may be configured to correlate the downward acceleration with a detected sound generated by goods dropping on a floor of the trailer, or generated by a person entering the cargo area. In the latter case, the detection module may be configured to correlate this event with further information about a state of the cargo area, and e.g. issue a warning of a potential burglary if the cargo area is in a locked state.

The acceleration may also be in a longitudinal or lateral direction of the vehicle, and the detection module may be adapted to correlate the acceleration with a sound of a collision with an object or a human, or with a gust of wind hitting the vehicle. The sound of the collision may also be correlated with a torque or a yaw moment of the vehicle.

The inclination of the vehicle may be correlated with a noise at the vehicle, e.g. in order to identify an impact of wind on the vehicle.

Especially on an autonomous vehicle there may exist further sensors which are adapted to detect a collision of the vehicle, as e.g. a camera and/or an acceleration sensor. The detection module may be configured to support the collision detection by correlating this data with an event detected in the acoustic sensor data.

Optionally, the reception module is further configured to retrieve, e.g. from an optional data storage of the detection system or elsewhere in the vehicle or via a means for communication of the vehicle from a remote sender, acoustic characteristics indicative of the event; and the detection module is further configured to detect the event by comparing the acoustic sensor data with the retrieved acoustic characteristics.

Here, the term acoustic characteristics refers to data which allows to identify particular events by characteristic properties e.g. of a spectrum, cepstrum or other frequency data, or of an amplitude sequence. The event may not be identified individually, but rather classified, i.e. identified as belonging to a particular class of events. The detection or identification of the event may be achieved by pattern matching. It may result in a likelihood or probability, with a value depending on the outcome of the pattern matching process. Instead of the reception module to retrieve the acoustic characteristics, the detection module may be configured to store a library of acoustic characteristics.

Optionally, the detection module is further configured to issue a warning to a remote server and/or to a person in the vehicle.

Optionally, the detection module is in particular configured to detect, as the event, one or more of the following: a collision of the vehicle with a human, a collision of the vehicle with an animal, a collision of the vehicle with another vehicle, a collision of the vehicle with another object, and/or another vehicle backing up (reversing) towards the vehicle.

Collisions may be detected by particular features in the acoustic sensor data, such as amplitude and/or frequency peaks, particular forms of time sequences or spectra, and/or by identifying particular distinctive sounds like a shattering glass, an opening airbag, or a crushing car body part. In a detection of a collision, the detection module may also be configured to detect a signal of a horn in the acoustic sensor data. Commercial vehicles or buses which are reversing can generate a special kind of sound, which the detection module may be configured to detect. If the vehicle is autonomous, this information may in particular be further utilized in a behavior planning or a trajectory planning.

According to the invention, the detection module is configured to detect, as the event, a side wind effect on the vehicle. Side wind is particularly relevant for a commercial vehicle, and especially for a truck-trailer vehicle combination. High-speed driving during strong side wind can require a significant counter-steering action from a driver or a lane-keeping autonomous driving task in order to keep the vehicle in the middle of the lane. A compensation of side wind effects requires a reliable detection. For sensors like e.g. acceleration sensors, typically present on the vehicle and employed for this task in known systems, side wind can be hard to detect and to distinguish from other causes, like e.g. a lateral slope of the road. Acoustic sensors present a powerful tool for detecting noise generated by the side wind. The detection module may be configured to detect gusts of wind, or a continuous wind situation. The detection module may be configured to apply an algorithm to subtract from the acoustic sensor data an effect of a headwind expected from a velocity of the vehicle. Information about wind or side wind effects may be corroborated by, or used in a corroboration of, a side wind detection from another system present on the vehicle.

Optionally, the detection module is further configured to estimate, from the side wind effect, a speed of the side wind.

According to the invention, the vehicle comprises a cargo area for transportation of cargo, at least one acoustic sensor of the one or more acoustic sensors is configured to sense audible acoustic waves in the cargo area, and optionally the detection module is further configured to detect one or more events corresponding to the following:
a cargo coverage failure, like e.g. a flapping of a covering,
a cargo disintegration,
a movement of cargo,
a burglary (forceful intrusion) of the cargo area,
a change in the cargo area that generates noise.

Embodiments further relate to a vehicle, in particular an autonomous vehicle, comprising one or more acoustic sensors configured to sense acoustic waves in an environment of the vehicle and to produce acoustic sensor data thereof, characterized by the acoustic detection system of any of the previous claims.

In a second aspect, the present invention further relates to a method of acoustic detection of an event for a vehicle according to claim 10.

This method may also be implemented in software or a computer program product according to claim 11.

Embodiments of the present invention can, in particular, implemented by software or a software module in an electronic control unit. Therefore, embodiments relate also to a computer program having a program code for performing the method, when the computer program is executed on a processor.

Some examples of the systems and/or methods will be described in the following by way of examples only, and with respect to the accompanying figures, in which:
- Fig. 1: depicts a schema of an acoustic detection system for a vehicle according to an embodiment of the present invention;
- Fig. 2: illustrates a collision detection by means of the acoustic detection system;
- Fig. 3: illustrates a detection of a reversing vehicle in a surrounding of the vehicle by the acoustic detection system;
- Fig. 4: illustrates a side wind detection by means of the acoustic detection system;
- Fig. 5: depicts a method of acoustic detection of an event for a vehicle according to the present invention.

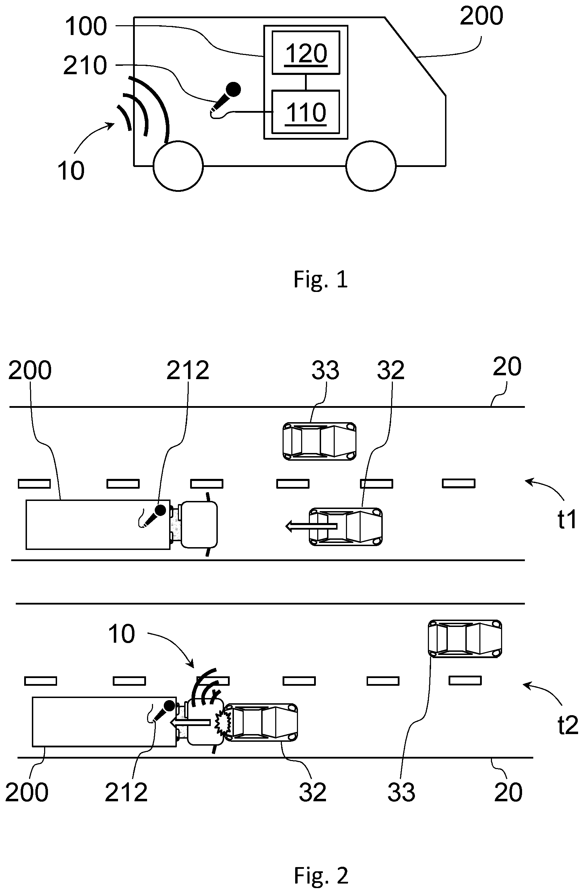

**Fig. 1** shows a schematic representation of an acoustic detection system 100 for a vehicle 200 according to an embodiment of the present invention. The vehicle comprises one or more acoustic sensors 210, configured to sense perceptible acoustic waves 10 in an environment of the vehicle and to produce sensor data (i.e., acoustic sensor data) thereof. The acoustic system 100 is characterized by a reception module 110, configured to receive the acoustic sensor data, and by a detection module 120, configured to detect, in the acoustic sensor data, an event on or around the vehicle 200. The vehicle 200 may in particular be an autonomous vehicle, and especially an autonomous commercial vehicle. The reception module 110 may be configured to receive data of further sensors on the vehicle, e.g. of an acceleration sensor measuring an acceleration of the vehicle 200, or of a camera producing an image of surroundings of the vehicle 200. If the vehicle 200 is an autonomous vehicle with an autonomous driving system, the reception module 110 and/or the detection module 120 may be further configured to send and receive data from other components of the autonomous driving system, in particular from a planning unit or from a means for communication.

The detection module 120 may e.g. be configured to detect, in the acoustic sensor data, a collision with another road user or some other object and/or a sound of a gust of wind or of continuous wind affecting the vehicle (with an appropriate subtraction for a headwind).. If the vehicle 200 is a commercial vehicle comprising a cargo area, the detection module 120 may be configured to detect events in the cargo area, like e.g. a flapping of a covering, falling cargo, an opening of a door and/or a loading/unloading of cargo into/from the cargo area, or an intrusion into the cargo area. The detection module 120 is configured to discriminate between different effects. The detection module 120 may detect the event by means of a machine learning algorithm, or by comparing the data with acoustic characteristics for an amplitude time series, or a frequency spectrum and/or cepstrum. The detection system 120 may be configured to store a library of acoustic characteristics, and/or the reception module may 110 be configured to retrieve these characteristics from a remote station, e.g. via a means for wireless communication of the vehicle 200.

**Fig. 2** illustrates a collision detection by means of the acoustic detection system 100 on a commercial vehicle 200, especially an autonomous commercial vehicle. The commercial vehicle comprises an acoustic sensor 212 (whose position may be different than depicted), configured to detect sound in the surroundings of the vehicle 200. The upper part of the figure represents a situation at a time t1, the lower part of the figure represents the situation at a later time t2. In the upper part of the figure, the commercial vehicle 200 drives on a road 20, with other vehicles 32, 33 in its vicinity. An arrow on the vehicle 32 driving in front of the commercial vehicle 200 indicates an acceleration of the vehicle 32 due to a braking of the vehicle 32. The commercial vehicle 200 does not have time to slow down sufficiently in order to avoid collision, and in the lower part of the figure, the commercial vehicle 200 collides with the vehicle 32. The collision produces a sound 10 which is captured by the acoustic sensor 212. The detection module 120 of the acoustic detection system 100 (not depicted) is configured to, after receiving the acoustic sensor data, detect the collision of the commercial vehicle 200 with the vehicle 32. The detection module 120 may be further configured to issue a warning or a report to a driver of the commercial vehicle 200, or send such a report to a remote station by means of a communication unit of the commercial vehicle 200, e.g. by wireless transmission. Furthermore, the reception module 110 is configured to receive, besides acoustic sensor data from the acoustic sensor 212, data from an acceleration sensor of the commercial vehicle 200, which measures a backward acceleration of the commercial vehicle 200 at the time of the collision. Rapid (unintended) change in an acceleration vector recognized by the acceleration sensor and a specific noise corresponding to the collision of the autonomous vehicle 200 with the other vehicle 32 can be correlated in the detection module 120. The detection module 120 may e.g. be configured to detect the collision, or further information about the collision, by correlating a time of the peak of the backward acceleration with a time, e.g. of a peak of an amplitude, in the acoustic sensor data. The detection means 120 may be configured to detect further information about the collision, such as a direction of the collision relative to the commercial vehicle 200 and/or an intensity of the collision, from including magnitude and direction of the acceleration in the detection algorithm.

Acoustic sensors, like the exemplary acoustic sensor 212 shown in the figure, can be placed at different positions on the commercial vehicle 200. In particular, one or more acoustic sensors may be installed on a trailer of the commercial vehicle 200 (e.g. at the rear end of the trailer). The detection module 120 may be configured to detect a collision by a specific noise, as e.g. a typical sound in case of docking at a yard. The detection module 120 may be further configured to receive, via the reception module 110, an information from another component of the commercial vehicle 200 (as e.g. an autonomous driving system) that the commercial vehicle 200 is reversing (backing up), and utilize this information for the detection of a collision of the commercial vehicle 200 while backing up against a docking yard.

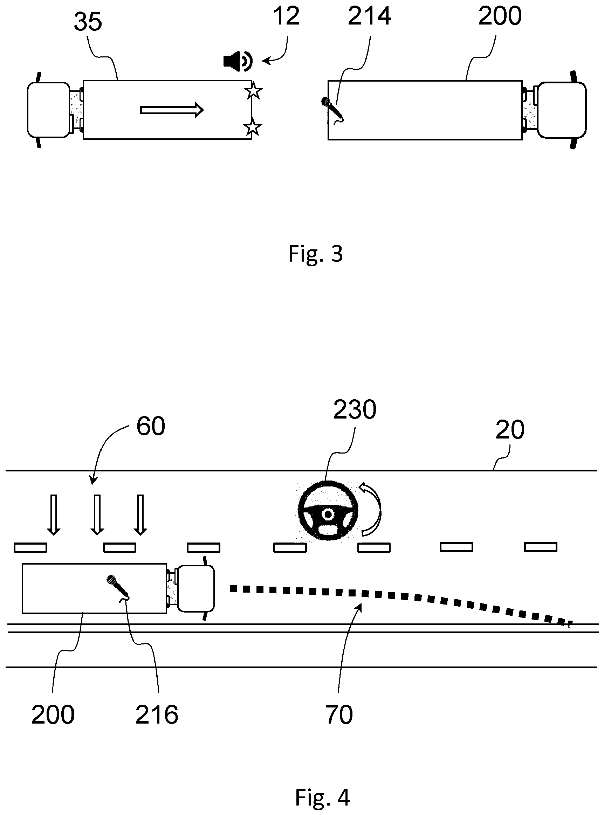

**Fig. 3** illustrates a detection of a reversing commercial vehicle 35 in a surrounding of the commercial vehicle 200 with the acoustic detection system 100 (not depicted) by the acoustic detection system 100. The commercial vehicle 200, here at standstill, comprises a sensor 214 located at the rear part of a trailer of the commercial vehicle 200. The reversing commercial vehicle 35 moves in a general direction of the commercial vehicle 200. While doing so, the reversing commercial vehicle 35 emits a sound 12, warning bystanders about its action. The acoustic sensor 214 is configured to pick up the sound 12, and the detection module 120 is configured to detect, as the event, the backing up of the reversing commercial vehicle 35. The detection module 120 may be configured to identify, based on the acoustic data of the sound 12, the reversing other commercial vehicle 35, as well as determine a direction and distance of the reversing commercial vehicle 35 relative to the commercial vehicle 200.

**Fig. 4** illustrates detection of a side wind 60 by means of the acoustic detection system 100 (not depicted) on the commercial vehicle 200. The commercial vehicle 200, which may in particular be an autonomous vehicle, comprises an acoustic sensor 216 (whose position may be different than depicted), configured to detect a sound of the side wind 60, and/or particularly of gusts of the side wind 60. Without compensation, the side wind 60 can have an effect of disturbing the commercial vehicle 200, such that the commercial vehicle 200 would follow the trajectory 70, and thus get off the lane or road 20, unless counter-steering 230 is applied in order to keep the commercial vehicle 200 on the road 20. The commercial vehicle 200 may in particular be equipped with another device, or an autonomous driving task, to identify and compensate the effect of the side wind 60 on the commercial vehicle 200, e.g. by means of a lateral acceleration. The effect of the side wind 60, however, can be hard to identify unambiguously, as acceleration may also occur due to bending or a slope of the road 20. The detection of the side wind 60 by means of the acoustic sensor 216 and the acoustic detection system 100 (not depicted) may serve as an additional input for the device or autonomous driving task to identify and compensate the effect of the side wind 60 on the commercial vehicle 200.

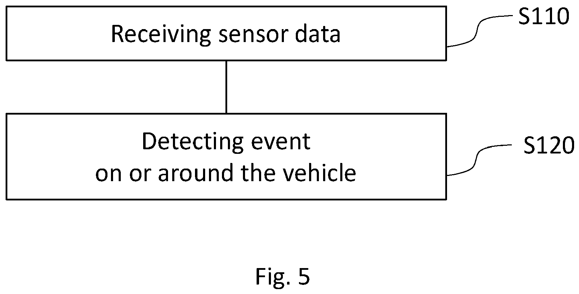

**Fig. 5** shows steps of a method of acoustic detection of an event for a vehicle 200 according to the present invention. The vehicle 200 comprises one or more acoustic sensors 210, 212, 214, 216, configured to sense acoustic waves in an environment of the vehicle 200, and to produce acoustic sensor data thereof. One step of the method comprises receiving S110 the acoustic sensor data. A further step of the method comprises detecting S120, in the acoustic sensor data, the event on or around the vehicle 200.

This method may also be a computer-implemented method. A person of skill in the art will readily recognize that steps of the above-described method may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described method, when executed on the computer or processor.

The description and drawings merely illustrate the principles of the disclosure. It will thus be appreciated that those skilled in the art will be able to devise various arrangements. The scope of the invention is defined solely by the appended claims. Furthermore, while each embodiment may stand on its own as a separate example, it is to be noted that in other embodiments the defined features can be combined differently, i.e. a particular feature described in one embodiment may also be realized in other embodiments. In particular, while reference signs for acoustic sensors can differ in the above description, they may refer to the same acoustic sensor. On the other hand, like labels of acoustic sensors in different figures do not necessarily imply the same acoustic sensor. While each figure displays only one acoustic sensor, it is understood that the vehicle 200 may contain several acoustic sensors for the same task, at various positions on the vehicle. In all figures, the symbol for an acoustic sensor is symbolic, and positions of acoustic sensors are only schematic, to the effect that they may be different from those depicted.

### LIST OF REFERENCE SIGNS

- 10, 12: acoustic waves
- 20: road
- 22: other driving surface
- 32, 33, 35: other vehicles
- 60: side wind
- 70: trajectory
- 100: acoustic detection system
- 110: reception module
- 120: detection module
- 200: vehicle
- 210, 212, 214, 216: acoustic sensors
- 230: counter-steering
- t1, t2: points in time
- S110, S120: steps of a method

## Claims

1. An acoustic detection system (100) for a vehicle (200), wherein the vehicle (200) comprises a cargo area for transportation of cargo and at least one acoustic sensor, the system further comprising
a reception module (110), configured to receive acoustic sensor data of the acoustic sensor; and
a detection module (120), configured to detect, in the acoustic sensor data, an event on or around the vehicle (200), the detection module (120) configured to detect, as the event a side wind effect on the vehicle (200);
**characterised in that** said acoustic sensor is a passive acoustic sensor configured to sense perceptible acoustic waves in the cargo area.

2. The acoustic detection system (100) of claim 1, wherein the vehicle (200) comprises at least one further sensor and/or camera for producing further sensor data indicative of the event,
**characterized in that**
the reception module (110) is further configured to receive the further sensor data, and the detection module (120) is further configure to include the further sensor data in detecting or in confirming the event.

3. The acoustic detection system (100) of claim 2,
**characterized in that**
the at least one further sensor and/or the camera is configured to sense one or more of the following: an acceleration, a torque, a yaw moment, a wheel speed, an inclination, a collision, a wind (60), a loading or an unloading, an opening of a loading area, an image of surroundings of the vehicle.

4. The acoustic detection system (100) of any of the preceding claims,
**characterized in that**
the reception module (110) is further configured to retrieve acoustic characteristics indicative of the event; and
the detection module (120) is further configured to detect the event by comparing the acoustic sensor data with the retrieved acoustic characteristics.

5. The acoustic detection system (100) of any of the preceding claims,
**characterized in that**
the detection module (120) is further configured to issue a warning to a remote server and/or to a person in the vehicle (200) upon detection or confirmation of the event.

6. The acoustic detection system (100) of any of the preceding claims,
**characterized in that**
the detection module (120) is configured to detect, as the event, one or more of the following:
a collision of the vehicle (200) with a human,
a collision of the vehicle (200) with an animal,
a collision of the vehicle (200) with another vehicle (32),
a collision of the vehicle (200) with another object,
driving on a road marking,
another vehicle (35) backing up towards the vehicle (200).

7. The acoustic detection system (100) of claim 6,
**characterized in that**
the detection module (120) is further configured to estimate, from the side wind effect, a speed of a side wind (60).

8. The acoustic detection system (100) of any of the preceding claims,
**characterized in that**
the detection module (120) is further configured to detect one or more events corresponding to the following:
a cargo coverage failure,
a cargo disintegration,
a movement of cargo,
a burglary of the cargo area,
a change in the cargo area that generates noise.

9. A vehicle (200), in particular an autonomous vehicle, wherein the vehicle (200) comprises a cargo area for transportation of cargo and at least one acoustic sensor, configured to sense perceptible acoustic waves in the cargo area,
**characterized by**
the acoustic detection system (100) of any of the previous claims.

10. A method of acoustic detection of an event for a vehicle (200), wherein the vehicle (200) comprises a cargo area for transportation of cargo and at least one acoustic sensor, the method comprising receiving (S110) acoustic sensor data; detecting (S120), in the acoustic sensor data of the acoustic sensor, as an event on or around the vehicle (200) a side wind effect on the vehicle (200); **characterised in that** said acoustic sensor is a passive acoustic sensor configured to sense perceptible acoustic waves in the cargo area.

11. A computer program product having stored a program code for performing the method of claim 10, when the computer program is executed on a computer or data processing unit.

## Patentansprüche

1. Akustisches Detektionssystem (100) für ein Fahrzeug (200), wobei das Fahrzeug (200) einen Laderaum für den Transport von Ladung und mindestens einen Akustiksensor umfasst, das System ferner umfassend ein Empfangsmodul (110), konfiguriert zum Empfangen von Akustiksensordaten des Akustiksensors; und
ein Detektionsmodul (120), konfiguriert zum Detektieren, in den Akustiksensordaten, eines Ereignisses auf dem oder um das Fahrzeug (200), wobei das Detektionsmodul (120) konfiguriert ist zum Detektieren, als das Ereignis, einer Wirkung von Seitenwind auf das Fahrzeug (200);
**dadurch gekennzeichnet, dass** der Akustiksensor ein passiver Akustiksensor ist, konfiguriert zum Erfassen von wahrnehmbaren akustischen Wellen in dem Laderaum.

2. Akustisches Detektionssystem (100) nach Anspruch 1, wobei das Fahrzeug (200) mindestens einen weiteren Sensor und/oder eine Kamera zum Produzieren von weiteren Sensordaten, die das Ereignis angeben, umfasst,
**dadurch gekennzeichnet, dass**
das Empfangsmodul (110) ferner konfiguriert ist zum Empfangen der weiteren Sensordaten und das Detektionsmodul (120) ferner konfiguriert ist zum Einbeziehen der weiteren Sensordaten beim Detektieren oder beim Bestätigen des Ereignisses.

3. Akustisches Detektionssystem (100) nach Anspruch 2,
**dadurch gekennzeichnet, dass**
der mindestens eine weitere Sensor und/oder die Kamera konfiguriert ist zum Erfassen eines oder mehrerer des Folgenden: eine Beschleunigung, ein Drehmoment, ein Giermoment, eine Raddrehzahl, eine Neigung, eine Kollision, ein Wind (60), eine Beladung oder eine Entladung, eine Öffnung eines Laderaums, ein Bild der Umgebung des Fahrzeugs.

4. Akustisches Detektionssystem (100) nach einem der vorhergehenden Ansprüche,
**dadurch gekennzeichnet, dass**
das Empfangsmodul (110) ferner konfiguriert ist zum Abrufen von akustischen Charakteristika, die das Ereignis angeben; und
das Detektionsmodul (120) ferner konfiguriert ist zum Detektieren des Ereignisses durch Vergleichen der Akustiksensordaten mit den abgerufenen akustischen Charakteristika.

5. Akustisches Detektionssystem (100) nach einem der vorhergehenden Ansprüche,
**dadurch gekennzeichnet, dass**
das Detektionsmodul (120) ferner konfiguriert ist zum Ausgeben einer Warnung an einen entfernten Server und/oder eine Person in dem Fahrzeug (200) nach der Detektion oder Bestätigung des Ereignisses.

6. Akustisches Detektionssystem (100) nach einem der vorhergehenden Ansprüche,
**dadurch gekennzeichnet, dass**
das Detektionsmodul (120) konfiguriert ist zum Detektieren, als das Ereignis, eines oder mehrerer des Folgenden:
eine Kollision des Fahrzeugs (200) mit einem Menschen,
eine Kollision des Fahrzeugs (200) mit einem Tier,
eine Kollision des Fahrzeugs (200) mit einem anderen Fahrzeug (32),
eine Kollision des Fahrzeugs (200) mit einem anderen Objekt,
Fahren auf einer Straßenmarkierung,
ein anderes Fahrzeug (35), das rückwärts hin zu dem Fahrzeug (200) fährt.

7. Akustisches Detektionssystem (100) nach Anspruch 6,
**dadurch gekennzeichnet, dass**
das Detektionsmodul (120) ferner konfiguriert ist zum Schätzen, aus der Wirkung von Seitenwind, einer Geschwindigkeit eines Seitenwinds (60).

8. Akustisches Detektionssystem (100) nach einem der vorhergehenden Ansprüche,
**dadurch gekennzeichnet, dass**
das Detektionsmodul (120) ferner konfiguriert ist zum Detektieren eines oder mehrerer Ereignisse korrespondierend mit dem Folgenden:
ein Fehler bei der Abdeckung der Ladung,
eine Desintegration der Ladung,
eine Bewegung von Ladung,
ein Einbruch in den Laderaum,
eine Veränderung in dem Laderaum, die Geräusche erzeugt.

9. Fahrzeug (200), insbesondere ein autonomes Fahrzeug, wobei das Fahrzeug (200) einen Laderaum für den Transport von Ladung und mindestens einen Akustiksensor umfasst, konfiguriert zum Erfassen von wahrnehmbaren akustischen Wellen in dem Laderaum,
**gekennzeichnet durch**
das akustische Detektionssystem (100) nach einem der vorhergehenden Ansprüche.

10. Verfahren zur akustischen Detektion eines Ereignisses für ein Fahrzeug (200), wobei das Fahrzeug (200) einen Laderaum für den Transport von Ladung und mindestens einen Akustiksensor umfasst, das Verfahren umfassend
Empfangen (S110) von Akustiksensordaten;
Detektieren (S120), in den Akustiksensordaten des Akustiksensors, als ein Ereignis auf dem oder um das Fahrzeug (200), einer Wirkung von Seitenwind auf das Fahrzeug (200); **dadurch gekennzeichnet, dass** der Akustiksensor ein passiver Akustiksensor ist, konfiguriert zum Erfassen von wahrnehmbaren akustischen Wellen in dem Laderaum.

11. Computerprogrammprodukt, in dem ein Programmcode zum Durchführen des Verfahrens nach Anspruch 10 gespeichert ist, wenn das Computerprogramm in einem Computer oder einer Datenverarbeitungseinheit ausgeführt wird.

## Revendications

1. Système (100) de détection acoustique d'un véhicule (200), dans lequel le véhicule (200) comprend une zone de cargaison pour le transport d'une cargaison et au moins un capteur acoustique, le système comprenant en outre :
un module (110) de réception, configuré pour recevoir une donnée de capteur acoustique ; et
un module (120) de détection, configuré pour détecter, dans la donnée de capteur acoustique, un événement sur ou autour du véhicule (200), le module (120) de détection étant configuré pour détecter, comme événement, un effet latéral du vent sur le véhicule (200) ;
**caractérisé en ce que**
ledit capteur acoustique est un capteur acoustique passif configuré pour détecter des ondes acoustiques perceptibles dans la zone la cargaison.

2. Système (100) de détection acoustique suivant la revendication 1, dans lequel le véhicule (200) comprend au moins un autre capteur et/ou une caméra pour produire une autre donnée de capteur indiquant l'évènement,
**caractérisé en ce que**
le module (110) de réception est configuré en outre pour recevoir l'autre donnée de capteur et le module (120) de détection est configuré en outre pour inclure l'autre donnée de capteur dans la détection ou la confirmation de l'évènement.

3. Système (100) de détection acoustique suivant la revendication 2,
**caractérisé en ce que**
le au moins un autre capteur et/ou la caméra est configuré pour détecter un ou plusieurs de ce qui suit : une accélération, un couple, un moment de lacet, une vitesse de roue, une inclinaison, une collision, un vent (60), une charge ou une décharge, une ouverture d'une zone de charge, une image de l'environnement du véhicule.

4. Système (100) de détection acoustique suivant l'une quelconque des revendications précédentes,
**caractérisé en ce que**
le module (110) de réception est configuré en outre pour retrouver des caractéristiques acoustiques indiquant l'évènement ; et
le module (120) de détection est configuré en outre pour détecter l'évènement en comparant la donnée de capteur acoustique aux caractéristiques acoustiques retrouvées.

5. Système (100) de détection acoustique suivant l'une quelconque des revendications précédentes,
**caractérisé en ce que**
le module (120) de détection est configuré en outre pour émettre une alerte à un serveur éloigné et/ou à une personne dans le véhicule (200), après détection ou confirmation de l'évènement.

6. Système (100) de détection acoustique suivant l'une quelconque des revendications précédentes,
**caractérisé en ce que**
le module (120) de détection est configuré pour détecter, comme événement, un ou plusieurs de ce qui suit :
une collision du véhicule (200) avec un homme,
une collision du véhicule (200) avec un animal,
une collision du véhicule (200) avec un autre véhicule (32),
une collision du véhicule (200) avec un autre objet,
une conduite sur un marquage de route,
un autre véhicule (35) en marche arrière vers le véhicule (200) .

7. Système (100) de détection acoustique suivant la revendication 6,
**caractérisé en ce que**
le module (120) de détection est configuré en outre pour estimer, à partir de l'effet de vent latéral, une vitesse d'un vent (60) latéral.

8. Système (100) de détection acoustique suivant l'une quelconque des revendications précédentes,
**caractérisé en ce que**
le module (120) de détection est configuré pour détecter l'un ou plusieurs des événements correspondant à ce qui suit :
un défaut de couverture de la cargaison,
une désintégration de la cargaison,
un déplacement de la cargaison,
un vol avec effraction dans la zone de la cargaison,
un changement dans la zone de cargaison, qui produit du bruit.

9. Véhicule (200), en particulier véhicule autonome, dans lequel le véhicule (200) comprend une zone de cargaison pour le transport d'une cargaison et au moins un capteur acoustique configuré pour détecter des ondes acoustiques perceptibles dans la zone de la cargaison,
**caractérisé par**
le système (100) de détection acoustique suivant l'une quelconque des revendications précédentes.

10. Procédé de détection acoustique d'un événement pour un véhicule (200), dans lequel le véhicule (200) comprend une zone de cargaison pour le transport d'une cargaison et au moins un capteur acoustique, le procédé comprenant :
la réception (S110) d'une donnée de capteur acoustique,
la détection (S120), dans la donnée de capteur acoustique du capteur acoustique comme un évènement sur ou autour du véhicule (200), un effet de vent latéral sur le véhicule (200) ; **caractérisé en ce que** ledit capteur acoustique est un capteur acoustique passif, configuré pour détecter des ondes acoustiques perceptibles dans la zone de la cargaison.

11. Produit de programme d'ordinateur, sur lequel est mis en mémoire un code de programme pour effectuer le procédé de la revendication 10, lorsque le programme d'ordinateur est exécuté sur un ordinateur ou sur une unité de traitement de données.
